# EUROPEAN PATENT SPECIFICATION

(11) **EP 4 495 216 B1**
(45) Date of publication and mention of the grant of the patent: **16.09.2026**
(21) Application number: 24176829.0
(22) Date of filing: 20.05.2024
(51) Int. Cl.: C12C 7/04, C12C 7/06, C12C 11/00, C12C 11/07, A23L 2/52, C11B 1/10

(54) **PROCESS AND PLANT FOR THE EXTRACTION OF ARABINO-XYLANES, PROTEINS AND ESSENTIAL OILS FROM BEER GRAINS AND THEIR USE IN LIQUID FOOD PRODUCTS**
VERFAHREN UND ANLAGE ZUR EXTRAKTION VON ARABINOXYLANEN, PROTEINEN UND ÄTHERISCHEN ÖLEN AUS BIERTREBERN UND DEREN VERWENDUNG IN FLÜSSIGEN LEBENSMITTELPRODUKTEN
PROCÉDÉ ET INSTALLATION D'EXTRACTION D'ARABINO-XYLANES, PROTÉINES ET HUILES ESSENTIELLES À PARTIR DE GRAINES DE BIÈRE ET LEUR UTILISATION DANS DES PRODUITS ALIMENTAIRES LIQUIDES

(30) Priority: 06.07.2023 IT 202300014073
(43) Date of publication of application: 22.01.2025
(73) Proprietor: Birrificio Baladin S.S. Agricola, 12060 Piozzo (CN) (IT); B.Botanic S.r.l., 12060 Piozzo (CN) (IT)
(72) Inventor: Ferrario, Alessandro, 12060 Piozzo (IT); Lamberti, Lorenzo, 12060 Piozzo (IT)
(74) Representative: Garavelli, Paolo

(56) References cited:
- CN-A- 109 601 956
- CN-A- 112 741 329
- "Handbook of Food Products Manufacturing", 1 January 2007, JOHN WILEY & SONS, article RONNIE WILLAERT: "Chapter 20 - The beer brewing process: Wort production and beer fermentation", pages: 443 - 506, XP055494325

## Description

The present invention refers to a process and a plant for the extraction of arabino-xylans, proteins and essential oils from beer grains and their use in liquid food products.

Beer grains (in English "Brewer's Spent Grain" - BSG) represent the main production waste in the beer production process, as approximately 35-40 kg of grains are produced for every 100 litres of drink.

The threshers are composed of the husk (*glumella*) which initially covers the barley grain, the pericarp and the seed coverings which remain after the mashing step.

Depending on the type of beer produced, in addition to barley malt, other cereals (malted or not) such as corn, rice, wheat, oats, rye or sorghum may be present.

The shelf life of grains is approximately 2-3 days in temperate climates, as they contain approximately 80% water and are an excellent substrate for microbial contamination and growth.

To be able to preserve the product, it is necessary to press or dry it so as to have a water content of less than 10%. The dry residue of the grains is composed of approximately 80% fibres (cellulose, hemicellulose and lignin) and 20% proteins (hordeins, glutelins, globulins and albumins). There are also vitamins, amino acids (in particular lysine), and phenolic compounds linked to the lignino-cellulose matrix.

The main current use of threshes is the delivery for animal feed or dispersion in the fields as fertilizer; this is due to the considerable costs for the transport and storage of the threshes for other uses: usually, breweries rely on agricultural companies present in the territory which go to recover the threshers free of charge.

Given the high nutritional value, threshes also represent a product that can be used for human consumption. In particular, after transformation into flour, they are used in various foods such as bread, biscuits and other snacks. The incorporation of threshed flour into baked products (at a rate of 20-30%) increases the content of fibre, proteins and amino acids, while decreasing the caloric intake.

Considering the growing interest in reusing waste products from agro-industrial processing from both an economic and an environmental point of view, brewer's grains nowadays represent a reusable waste as an ingredient in food products, especially in bread, biscuits or other dairy products. oven thanks to the high fibre and protein content.

So far, however, no study has dealt with the extraction of arabino-xylans, proteins and essential oils from beer grains and the use of such extracts within liquid food products, for example beverages such as the beers from which these grains are obtained.

CN 109 601 956 A, CN 112 741 329 A and Ronnie Willaert: "Chapter 20 - The beer brewing process: Wort production and beer fermentation" in: "Handbook of Food Products Manufacturing", 1 January 2007, John Wiley & Sons, pages 443-506 disclose prior art processes for beer production.

Object of the present invention is therefore extracting xylans, proteins and essential oils from arabino-xylan beer grains to use them in an efficient, innovative and immediate way in liquid food products, in particular the beer from which they come, in order to enrich it with the properties of the arabino-xylans, proteins and essential oils themselves.

The above and other objects and advantages of the invention, as will appear from the following description, are achieved with a process and a plant for the extraction of arabinoxylans, proteins and essential oils from brewer's grains and their use in food products. liquids such as those described in the respective independent claims. Preferred embodiments and non-trivial variants of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by some preferred embodiments thereof, provided by way of example and not by way of limitation. The present invention is defined by the appended claims.

The process of the invention is therefore used for the extraction of arabino-xylans, proteins and essential oils from beer grains and their use in liquid food products, and includes the steps of:
- extraction of arabino-xylans from beer grains
- extraction of proteins from beer grains
- extraction of essential oils from beer grains through microwave-assisted hydro-distillation
- delivery of arabino-xylans, proteins and essential oils within liquid food products, in particular beverages.

In particular, the extraction step of arabino-xylans from beer grains includes the following sub-steps.

The brewing process begins with the grinding of the cereals and the extraction of the sugars present in the starch of the cereals to produce the must, the medium on which the yeasts will carry out the fermentation, transforming the must into beer. At the end of this initial step, one has a liquid solution with a large number of solids in suspension: these are filtered generating the waste product to be used as a source of arabino-xylans. At the end of the filtration, the grains have a humidity concentration of around 80% which makes them both difficult to transport and at risk of contamination. To reduce this problem, the grains are pressed on site to lower the humidity to around 50% and then transported and treated, preferably the same day. The stabilization of the grains consists in drying them until they reach humidity concentrations lower than 10%: at this point, the grains can also be stored for medium-long periods in a dry and thermo-stated environment. At the end of drying, the grains are subjected to enzymatic digestion. At the end of the enzymatic digestion, the arabino-xylans are resuspended in water and, to facilitate their use, they undergo the spray drying process, in order to transform them into an easy-to-use anhydrous powder. These purified and freeze-dried fibres will be added to a dough, for example to the classic "Albertengo panettone" dough, like a traditional flour.

Furthermore, in particular, the extraction step of proteins from brewer's grains includes the following sub-steps.

The protein extraction process begins with the rehydration of the grains. Subsequently, the system is heated and the enzymes responsible for the hydrolysis of arabino-xylans are introduced, which are thus transferred into the aqueous medium. At this point, the solids are separated from the liquids through a simple filtration, and the fibres hydrolysed by the enzymes are obtained in the liquid step, while, in the solid state, the residues of the threshers are obtained. Normally, the solid residue formed finds no further use and is treated as production waste without being valorised. However, the remaining biomass still has a good amount of protein that can be extracted. This operation is divided into a first step of protein release through ultrasound or enzymatic pretreatments capable of freeing the protein component trapped in the cell walls and in the cytosol. Subsequently, the denaturation of the proteins is induced by causing their precipitation through salting-out or by basifying the medium.

In particular, the extraction step of essential oils from beer grains through hydro-distillation assisted by a microwave reactor includes the following sub-steps.

A preferred implementation of the extraction process was carried out using the ETHOS XL microwave reactor from the Milestone company. The process consists of a hydro-distillation in which the heating of the system is induced by 2 magnetrons which irradiate the biomass in the reactor in a uniform way. The ability to transfer thermal energy within the system in this way, without using flames or heated surfaces, reduces combustion phenomena and the production of unwanted artefacts which would alter the organoleptic properties of the extract. Another peculiarity of this process is that the oils extracted through hydro-distillation are pure and without any type of solvent, so they take up little space and only require a dark refrigerated environment for their conservation.

In particular, the conveyance step of arabino-xylans, proteins and essential oils within drinks includes the following sub-steps.

Given the lipophilic nature of essential oils, solubilization in aqueous drinks is very difficult. In order to stably resuspend the essential oils, it is necessary to create an emulsion inside the drink so as not to form a bi-phase on the surface. To create this emulsion, in a preferred embodiment, the Applicant took a sample of beer within which to resuspend the oils, and, following a series of serial dilutions, resuspended the essential oils in one hundred times their volume. At the end of this operation, a stabilized emulsion was obtained through ultrasound treatment, and was kept under constant stirring until inoculation. To introduce this emulsion created in the laboratory, a dispenser connected downstream to the centrifugation and carbonation system of a brewery was used. This dispenser is able to take small quantities of a liquid and introduce them into the product flow coming out of the centrifuge and carbonator, in order to facilitate its re-suspension within the final total volume. The beer centrifugation and carbonation system available to the brewery was able to process an average of 4000 L/h while the dispenser managed to introduce 2mL/L. In this way, it was possible to constantly introduce small quantities of the essential oil suspension without inducing a local over-concentration which would have inevitably caused the reappearance of the essential oil/beer bi-phase.

The present invention also relates to a plant (not illustrated) for the extraction of arabino-xylans, proteins and essential oils from beer grains and their use in liquid food products; this system includes:
- means for extraction of arabino-xylans from brewer's grains
- means for extracting proteins from brewer's grains
- means for extracting essential oils from brewer's grains through microwave-assisted hydro-distillation
- means for conveying arabino-xylans, proteins and essential oils within liquid food products, in particular drinks.

In particular, the means for extracting arabino-xylans from brewer's grains include:
- means for grinding cereals and extracting sugars present in the starch of the cereals to produce the must, the medium on which the yeasts will operate the fermentation transforming the must into beer, these means producing a liquid solution with a large number of solids in suspension;
- means for filtering suspended solids, generating a waste product to be used as a source of arabino-xylans, at the end of the filtration the grains present themselves with a humidity concentration of around 80% which makes them both difficult to transport and risk of contamination;
- means for pressing the threshers to lower the humidity to around 50%;
- means for treating the pressed grains through stabilization consisting of drying until humidity concentrations of less than 10% are reached, and means for storing the grains in a dry and thermo-stated environment;
- means for carrying out an enzymatic digestion of the grains, in which, at the end of the enzymatic digestion, the arabino-xylans are resuspended in water and to facilitate their use they undergo the spray drying process in a to transform them into an easy-to-use anhydrous powder;
- means for adding purified and freeze-dried thresh fibres to a dough such as traditional flour.

Again in particular, the means for extracting proteins from brewer's grains include:
- means for rehydrating the threshers;
- means for heating the grains and introducing the enzymes responsible for the hydrolysis of the arabino-xylans, which are thus transferred into the aqueous medium;
- means for separating solids from liquids through simple filtration and obtaining fibres hydrolysed by enzymes in the liquid step, while the residues of the threshers are obtained in the solid state;
- means for extracting proteins from the solid residue formed, including means for releasing proteins through ultrasound or enzymatic pretreatments capable of freeing the protein component trapped in the cell walls and in the cytosol, and means for inducing the denaturation of proteins causing their precipitation through salting-out or basifying the medium.

Again in particular, the means for extracting essential oils from beer grains through hydro-distillation include a microwave reactor and:
- hydro-distillation means, in which the heating of the system is induced by 2 magnetrons which irradiate the biomass in the reactor in a uniform way, the ability to transfer thermal energy within the system in this way reducing combustion phenomena and production of unwanted artefacts which would alter the organoleptic properties of the extract;
- means for preserving the extracted oils, pure, without any type of solvent and which take up little space, in a dark refrigerated environment.

Finally, in particular, the means for conveying arabino-xylans, proteins and essential oils within liquid food products, in particular beverages, include:
- means for creating an emulsion inside the drink so as not to form a bi-phase on the surface, by re-suspension of the oils in the drink in a quantity much higher (about a hundred times) than their volume, following a series of serial dilutions;
- means for obtaining a stabilized emulsion through ultrasound treatment;
- means for maintaining the emulsion in constant agitation until its introduction into the drink;
- means for introducing the emulsion into the drink via a dispenser connected downstream of a beverage production plant, this dispenser being able to withdraw small quantities of a liquid and introduce them into the product flow exiting the plant of production in order to facilitate its re-suspension within the final total volume of the drink.

According to the practical embodiment described, the plant for the production of the drink is a beer centrifugation and carbonation plant capable of processing an average of 4000 L/h, while the dispenser is able to introduce 2mL/L of emulsion, in this thus managing to constantly introduce small quantities of the essential oil suspension without inducing a local over-concentration which would inevitably cause the reappearance of the essential oil/beer bi-phase.

## Claims

1. Process for the extraction of arabino-xylans, proteins and essential oils from beer grains and their use in liquid food products, the process including the steps of:
- extraction of arabino-xylans from beer grains
- extraction of proteins from beer grains
- extraction of essential oils from beer grains through microwave-assisted hydro-distillation
- delivery of arabino-xylans, proteins and essential oils within liquid food products, in particular beverages.

2. Process according to claim 1, wherein the step of extraction of arabino-xylans from brewer's grains includes the sub-steps of:
- grinding of cereals and extraction of sugars present in the starch of the cereals to produce the must, the medium on which the yeasts will carry out the fermentation transforming the must into beer, this step producing a liquid solution with a large number of solids in suspension;
- filtration of suspended solids, generating a waste product to be used as a source of arabino-xylans, at the end of the filtration the grains present themselves with a humidity concentration of around 80% which makes them both difficult to transport and at risk of contamination;
- pressing of the grains to lower the humidity to around 50%;
- treatment of the pressed grains through stabilization consisting of drying until humidity concentrations of less than 10% are reached, and storage of the grains in a dry and thermo-stated environment;
- carrying out an enzymatic digestion of the grains, in which, at the end of the enzymatic digestion, the arabino-xylans are resuspended in water and to facilitate their use they undergo the spray drying process, in order to transform them in an easy-to-use anhydrous powder;
- addition of purified and freeze-dried grain fibres to a mixture such as traditional flour.

3. Process according to claim 1 or 2, wherein the step of extracting proteins from brewer's grains includes the sub-steps of:
- rehydration of the grains;
- heating of the grains and introduction of the enzymes responsible for the hydrolysis of the arabino-xylans, which are thus transferred into the aqueous medium;
- separation of solids from liquids through simple filtration and obtaining the fibres hydrolysed by the enzymes in the liquid step, while the residues of the threshers are in the solid state;
- extraction of proteins from the solid residue formed, including a first step of protein release through ultrasound or enzymatic pretreatments capable of freeing the protein component trapped in the cell walls and in the cytosol, and a second step in which the denaturation of the proteins is induced causing their precipitation through salting-out or basifying the medium.

4. Process according to claim 1, 2 or 3, wherein the extraction step of essential oils from beer grains through hydro-distillation occurs using a microwave reactor and includes the sub-steps of:
- hydro-distillation, in which the heating of the system is induced by 2 magnetrons which irradiate the biomass in the reactor in a uniform way, the ability to transfer thermal energy within the system in this way reducing combustion phenomena and the production of artefacts unwanted products which would alter the organoleptic properties of the extract;
- conservation of the extracted oils, pure, without any type of solvent and which take up little space, in a dark refrigerated environment.

5. Process according to any of the previous claims, wherein the step of conveying arabino-xylans, proteins and essential oils within liquid food products, in particular drinks, includes the sub-steps of:
- creation of an emulsion inside the drink so as not to form a bi-phase on the surface, through re-suspension of the oils in the drink in approximately one hundred times their volume, following a series of serial dilutions;
- obtaining a stabilized emulsion through ultrasound treatment;
- maintaining the emulsion in constant agitation until its introduction into the drink;
- introduction of the emulsion into the drink via a dispenser connected downstream of a beverage production plant, this dispenser being able to withdraw small quantities of a liquid and introduce them into the product flow exiting the production plant in order to facilitate its re-suspension within the final total volume of the drink.

6. Process according to claim 5, in which the plant for producing the drink is a beer centrifugation and carbonation plant capable of processing an average of 4000 L/h, while the dispenser is able to introduce 2mL/L of emulsion, in this way managing to constantly introduce small quantities of the essential oil suspension without inducing a local over-concentration which would inevitably cause the reappearance of the essential oil/beer bi-phase.

7. Plant for the extraction of arabino-xylans, proteins and essential oils from beer grains and their use in liquid food products, the plant including:
- means for extracting arabino-xylans from brewer's grains
- means for extracting proteins from brewer's grains
- means for extracting essential oils from brewer's grains through microwave-assisted hydro-distillation
- means for conveying arabino-xylans, proteins and essential oils within liquid food products, in particular drinks.

8. Plant according to claim 7, wherein the means for extracting arabino-xylans from brewer's grains comprises:
- means for grinding cereals and extracting sugars present in the starch of the cereals to produce the must, the medium on which the yeasts will operate the fermentation transforming the must into beer, these means producing a liquid solution with a large number of solids in suspension;
- means for filtering suspended solids, generating a waste product to be used as a source of arabino-xylans, at the end of the filtration the grains present themselves with a humidity concentration of around 80% which makes them both difficult to transport and risk of contamination;
- means for pressing the threshers to lower the humidity to around 50%;
- means for treating the pressed grains through stabilization consisting of drying until humidity concentrations of less than 10% are reached, and storage of the grains in a dry and thermo-stated environment;
- means for carrying out an enzymatic digestion of the grains, in which, at the end of the enzymatic digestion, the arabino-xylans are resuspended in water and to facilitate their use they undergo the spray drying process, so to transform them into an easy-to-use anhydrous powder;
- means for adding purified and freeze-dried thresh fibres to a dough such as traditional flour.

9. Plant according to claim 7 or 8, wherein the means for extracting proteins from brewer's grains comprise:
- means for rehydrating the threshers;
- means for heating the grains and introducing the enzymes responsible for the hydrolysis of the arabino-xylans, which are thus transferred into the aqueous medium;
- means for separating solids from liquids through simple filtration and obtaining the fibres hydrolysed by the enzymes in the liquid step, while the residues of the threshers are in the solid state;
- means for extracting proteins from the solid residue formed, including means for releasing proteins through ultrasound or enzymatic pretreatments capable of freeing the protein component trapped in the cell walls and in the cytosol, and means for inducing the denaturation of proteins causing their precipitation through salting-out or basifying the medium.

10. Plant according to claim 7, 8 or 9, wherein the means for extracting essential oils from brewer's grains through hydro-distillation comprises a microwave reactor and:
- hydro-distillation means, in which the heating of the system is induced by 2 magnetrons which irradiate the biomass in the reactor in a uniform way, the ability to transfer thermal energy within the system in this way reducing combustion phenomena and production of unwanted artefacts which would alter the organoleptic properties of the extract;
- means for preserving the extracted oils, pure, without any type of solvent and which take up little space, in a dark refrigerated environment.

11. Plant according to any one of claims 7 to 10 above, wherein the means for conveying arabino-xylans, proteins and essential oils within liquid food products, in particular beverages, include:
- means for creating an emulsion inside the drink so as not to form a bi-phase on the surface, through re-suspension of the oils in the drink in approximately one hundred times their volume, following a series of serial dilutions;
- means for obtaining a stabilized emulsion through ultrasound treatment;
- means for maintaining the emulsion in constant agitation until its introduction into the drink;
- means for introducing the emulsion into the drink via a dispenser connected downstream of a beverage production plant, this dispenser being able to withdraw small quantities of a liquid and introduce them into the product flow exiting the plant of production in order to facilitate its re-suspension within the final total volume of the drink.

12. Plant according to claim 11, in which the plant for producing the drink is a beer centrifugation and carbonation plant capable of processing an average of 4000 L/h, while the dispenser is able to introduce 2mL/L of emulsion, in this way managing to constantly introduce small quantities of the essential oil suspension without inducing a local over-concentration which would inevitably cause the reappearance of the essential oil/beer bi-phase.

## Patentansprüche

1. Verfahren zur Gewinnung von Arabinoxylanen, Proteinen und ätherischen Ölen aus Brauereiabfällen und deren Verwendung in flüssigen Lebensmitteln, wobei das Verfahren die folgenden Phasen umfasst:
- Extraktion von Arabinoxylanen aus Brauereiabfällen
- Proteingewinnung aus Biertreber
- Gewinnung ätherischer Öle aus Brauereiabfällen durch mikrowellenunterstützte Wasserdampfdestillation
- Einbringen von Arabinoxylanen, Proteinen und ätherischen Ölen in flüssige Lebensmittel, insbesondere Getränke.

2. Verfahren nach Anspruch 1, wobei der Schritt der Extraktion von Arabinoxylanen aus Brauereiabfällen die folgenden Teilschritte umfasst:
- Mahlen von Getreide und Extrahieren der in der Getreidestärke enthaltenen Zucker zur Herstellung des Mostes, des Mediums, auf dem die Hefen die Gärung durchführen und den Most in Bier umwandeln; in dieser Phase entsteht eine flüssige Lösung mit einer großen Anzahl suspendierter Feststoffe;
- Filtration von Schwebstoffen, wobei ein Abfallprodukt entsteht, das als Quelle für Arabinoxylane genutzt wird. Am Ende der Filtration weisen die Treber eine Feuchtigkeitskonzentration von etwa 80 % auf, was den Transport erschwert und die Gefahr einer Kontamination birgt;
- das Auspressen des Bodensatzes, um die Luftfeuchtigkeit auf etwa 50 % zu senken;
- Behandlung von gepresstem Getreide durch Stabilisierung, bestehend aus Trocknung bis zu einem Feuchtigkeitsgehalt von unter 10% und Lagerung des Getreides in einer trockenen, thermostatisch geregelten Umgebung;
- Durchführung eines enzymatischen Aufschlusses der Treber, bei dem die Arabinoxylane am Ende des enzymatischen Aufschlusses in Wasser resuspendiert und, um ihre Verwendung zu erleichtern, einem Sprühtrocknungsprozess unterzogen werden, um sie in ein anwendungsfreundliches, wasserfreies Pulver zu verwandeln;
- Zugabe von gereinigten und gefriergetrockneten Getreidefasern zu einer Mischung wie herkömmliches Mehl.

3. Verfahren nach Anspruch 1 oder 2, wobei der Schritt der Proteinextraktion aus Brauereiabfällen die folgenden Teilschritte umfasst:
- Rehydrierung des Trebers;
- Erhitzen des Trebers und Zugabe der für die Hydrolyse der Arabinoxylane verantwortlichen Enzyme, die anschließend in das wässrige Medium überführt werden;
- Trennung von Feststoffen und Flüssigkeiten durch einfache Filtration und Gewinnung der durch Enzyme in der flüssigen Phase hydrolysierten Fasern, während die Rückstände des Trebers im festen Zustand vorliegen;
- Extraktion von Proteinen aus dem gebildeten festen Rückstand, einschließlich einer ersten Phase der Proteinfreisetzung durch Ultraschall- oder enzymatische Vorbehandlungen, die in der Lage sind, die in den Zellwänden und im Zytosol eingeschlossene Proteinkomponente freizusetzen, und einer zweiten Phase, in der die Denaturierung der Proteine induziert wird, was zu deren Ausfällung durch Aussalzen oder Alkalisieren des Mediums führt.

4. Verfahren nach Anspruch 1, 2 oder 3, wobei der Schritt der Gewinnung ätherischer Öle aus Brauereiabfällen durch Wasserdampfdestillation unter Verwendung eines Mikrowellenreaktors erfolgt und die folgenden Teilschritte umfasst:
- Wasserdampfdestillation, bei der die Erwärmung des Systems durch zwei Magnetronen induziert wird, die die Biomasse im Reaktor gleichmäßig bestrahlen; die Fähigkeit, thermische Energie auf diese Weise innerhalb des Systems zu übertragen, reduziert Verbrennungsphänomene und die Entstehung unerwünschter Artefakte, die die organoleptischen Eigenschaften des Extrakts verändern würden;
- Lagerung der extrahierten Öle, rein, ohne jegliche Lösungsmittel und platzsparend, in einer dunklen, gekühlten Umgebung.

5. Verfahren nach einem der vorhergehenden Ansprüche, wobei der Schritt des Überführens von Arabinoxylanen, Proteinen und ätherischen Ölen in flüssige Lebensmittel, insbesondere Getränke, die folgenden Teilschritte umfasst:
- Herstellung einer Emulsion im Getränk, um die Bildung einer Zweiphasenströmung an der Oberfläche zu verhindern, indem die Öle nach einer Reihe von Verdünnungsschritten im Getränk auf etwa das Hundertfache ihres Volumens resuspendiert werden;
- Gewinnung einer stabilisierten Emulsion durch Ultraschallbehandlung;
- die Emulsion bis zur Zugabe zum Getränk unter ständigem Rühren halten;
- Einleitung der Emulsion in das Getränk über einen nachgeschalteten Dosierer, der in der Lage ist, kleine Mengen einer Flüssigkeit zu entnehmen und in den Produktstrom einzubringen, der die Produktionsanlage verlässt, um deren Resuspension im gesamten Endvolumen des Getränks zu erleichtern.

6. Verfahren nach Anspruch 5, wobei es sich bei der Getränkeproduktionsanlage um eine Bierzentrifugier- und Karbonisierungsanlage mit einer durchschnittlichen Verarbeitungskapazität von 4000 l/h handelt, während der Spender 2 ml/l Emulsion einleiten kann, wodurch es gelingt, kontinuierlich kleine Mengen der ätherischen Ölsuspension einzuführen, ohne eine lokale Überkonzentration hervorzurufen, die unweigerlich zum Wiederauftreten der Zweiphasenmischung aus ätherischem Öl und Bier führen würde.

7. Anlage zur Gewinnung von Arabinoxylanen, Proteinen und ätherischen Ölen aus Brauereiabfällen und deren Verwendung in flüssigen Lebensmitteln, wobei die Anlage Folgendes umfasst:
- Verfahren zur Gewinnung von Arabinoxylanen aus Brauereiabfällen
- Verfahren zur Proteingewinnung aus Biertreber
- Verfahren zur Gewinnung ätherischer Öle aus Brauereiabfällen durch mikrowellenunterstützte Wasserdampfdestillation
- Mittel zum Transport von Arabinoxylanen, Proteinen und ätherischen Ölen in flüssige Lebensmittel, insbesondere Getränke.

8. Anlage nach Anspruch 7, wobei die Mittel zur Gewinnung von Arabinoxylanen aus Brauereiabfällen Folgendes umfassen:
- Verfahren zum Mahlen von Getreide und Extrahieren der in der Stärke des Getreides enthaltenen Zucker zur Herstellung der Würze, des Mediums, auf dem die Hefen die Gärung durchführen und die Würze in Bier umwandeln, solche Verfahren zur Herstellung einer flüssigen Lösung mit einer großen Anzahl suspendierter Feststoffe;
- Verfahren zur Filtration suspendierter Feststoffe, wobei ein Abfallprodukt entsteht, das als Quelle für Arabinoxylane genutzt werden kann; am Ende des Filtrationsprozesses weisen die Treber eine Feuchtigkeitskonzentration von rund 80 % auf, was den Transport erschwert und die Gefahr einer Kontamination birgt;
- Verfahren zum Pressen des Getreides, um die Feuchtigkeit auf etwa 50 % zu senken;
- Verfahren zur Behandlung von gepresstem Getreide durch Stabilisierung, bestehend aus Trocknung bis zu einem Feuchtigkeitsgehalt von weniger als 10 % und Lagerung des Getreides in einer trockenen, thermostatisch geregelten Umgebung;
- Verfahren zur enzymatischen Aufspaltung der Treber, wobei die Arabinoxylane am Ende der enzymatischen Aufspaltung in Wasser resuspendiert und, um ihre Verwendung zu erleichtern, einem Sprühtrocknungsprozess unterzogen werden, um sie in ein anwendungsfreundliches, wasserfreies Pulver zu überführen;
- Verfahren zur Zugabe von gereinigten und gefriergetrockneten Getreidefasern zu einer Mischung wie herkömmlichem Mehl.

9. Anlage nach Anspruch 7 oder 8, wobei die Mittel zur Gewinnung von Proteinen aus Brauereiabfällen Folgendes umfassen:
- Mittel zur Rehydratisierung des Bodensatzes;
- Verfahren zum Erhitzen der Körner und zum Einbringen der für die Hydrolyse der Arabinoxylane verantwortlichen Enzyme, die dann in das wässrige Medium überführt werden;
- Verfahren zur Trennung von Feststoffen und Flüssigkeiten durch einfache Filtration und Gewinnung der durch Enzyme in der flüssigen Phase hydrolysierten Fasern, während die Rückstände des Trebers im festen Zustand vorliegen;
- Mittel zur Gewinnung von Proteinen aus dem gebildeten festen Rückstand, einschließlich Mittel zur Freisetzung der Proteine durch Ultraschall- oder enzymatische Vorbehandlungen, die in der Lage sind, die in den Zellwänden und im Zytosol eingeschlossene Proteinkomponente freizusetzen, sowie Mittel zur Herbeiführung der Denaturierung der Proteine durch Ausfällung mittels Salzen oder durch Basifizierung des Mediums.

10. Anlage nach Anspruch 7, 8 oder 9, wobei die Mittel zur Gewinnung ätherischer Öle aus Brauereiabfällen durch Wasserdampfdestillation einen Mikrowellenreaktor umfassen und:
- Wasserdampfdestillationsmedien, bei denen die Erwärmung des Systems durch 2 Magnetronen induziert wird, die die Biomasse im Reaktor gleichmäßig bestrahlen, die Fähigkeit, thermische Energie innerhalb des Systems auf diese Weise zu übertragen, wodurch Verbrennungsphänomene und die Bildung unerwünschter Artefakte, die die organoleptischen Eigenschaften des Extrakts verändern würden, reduziert werden;
- Verfahren zur Aufbewahrung extrahierter Öle, rein, ohne jegliche Lösungsmittel und platzsparend, in einer dunklen, gekühlten Umgebung.

11. Anlage nach einem der vorhergehenden Ansprüche 7 bis 10, wobei die Mittel zum Überführen von Arabinoxylanen, Proteinen und ätherischen Ölen in flüssige Lebensmittel, insbesondere Getränke, Folgendes umfassen:
- Verfahren zur Herstellung einer Emulsion innerhalb des Getränks, um die Bildung einer Zweiphasenströmung an der Oberfläche zu verhindern, indem die Öle im Getränk nach einer Reihe von Verdünnungsschritten auf etwa das Hundertfache ihres Volumens resuspendiert werden;
- Verfahren zur Gewinnung einer stabilisierten Emulsion durch Ultraschallbehandlung;
- Mittel zur Aufrechterhaltung der ständigen Bewegung der Emulsion bis zu ihrer Zugabe zum Getränk;
- Mittel zum Einbringen der Emulsion in das Getränk über einen nachgeschalteten Spender, wobei dieser Spender in der Lage ist, kleine Mengen einer Flüssigkeit aufzunehmen und sie dem Produktstrom, der die Produktionsanlage verlässt, zuzuführen, um deren Resuspension im gesamten Endvolumen des Getränks zu erleichtern.

12. Anlage nach Anspruch 11, wobei es sich bei dem Getränkeproduktionssystem um ein Bierzentrifugier- und Karbonisierungssystem handelt, das durchschnittlich 4000 l/h verarbeiten kann, während der Spender in der Lage ist, 2 ml/l Emulsion einzuführen, wodurch es gelingt, kontinuierlich kleine Mengen der ätherischen Ölsuspension einzuführen, ohne eine lokale Überkonzentration hervorzurufen, die unweigerlich zum Wiederauftreten der Zweiphasenmischung aus ätherischem Öl und Bier führen würde.

## Revendications

1. Procédé d'extraction des arabino-xylanes à partir de drêches de brasserie arabino-xylanes, de protéines et d'huiles essentielles à partir de drêches de brasserie et de leur utilisation dans des produits alimentaires liquides, le procédé comprenant les phases suivantes :
- Extraction des arabino-xylanes à partir de drêches de brasserie
- Extraction de protéines à partir de drêches de brasserie
- Extraction d'huiles essentielles à partir de drêches de brasserie par hydrodistillation assistée par micro-ondes
- l'incorporation d' arabinoxylanes , de protéines et d'huiles essentielles dans les produits alimentaires liquides, notamment les boissons.

2. Procédé selon la revendication 1, dans lequel l'étape d'extraction des arabino-xylanes à partir de drêches de brasserie comprend les sous-étapes suivantes :
- le broyage des céréales et l'extraction des sucres présents dans l'amidon des céréales pour produire le moût, le milieu sur lequel les levures effectueront la fermentation, transformant le moût en bière, cette phase produisant une solution liquide avec un grand nombre de matières en suspension ;
- filtration des matières en suspension, générant un déchet à utiliser comme source d'arabino-xylanes ; à la fin de la filtration, les grains usés ont une concentration d'humidité d'environ 80 %, ce qui les rend à la fois difficiles à transporter et exposés à un risque de contamination ;
- pressage du dépôt pour abaisser l'humidité à environ 50 % ;
- traitement des grains pressés par stabilisation consistant en un séchage jusqu'à ce que les concentrations d'humidité soient inférieures à 10 %, et stockage des grains dans un environnement sec et thermostaté ;
- effectuer une digestion enzymatique des drêches, dans laquelle, à la fin de la digestion enzymatique, les arabino-xylanes sont remis en suspension dans l'eau et, pour faciliter leur utilisation, ils subissent un processus de séchage par pulvérisation, afin de les transformer en une poudre anhydre facile à utiliser ;
- ajout de fibres de céréales draguées purifiées et lyophilisées à un mélange tel que la farine traditionnelle.

3. Procédé selon la revendication 1 ou 2, dans lequel l'étape d'extraction des protéines des drêches de brasserie comprend les sous-étapes suivantes :
- réhydratation des drêches ;
- chauffage des drêches et introduction des enzymes responsables de l'hydrolyse des arabino-xylanes , qui sont ensuite transférés dans le milieu aqueux ;
- séparation des solides et des liquides par simple filtration et obtention des fibres hydrolysées par des enzymes en phase liquide, tandis que les résidus de la drêche sont à l'état solide ;
- extraction des protéines à partir du résidu solide formé, comprenant une première phase de libération des protéines par des prétraitements ultrasoniques ou enzymatiques capables de libérer le composant protéique piégé dans les parois cellulaires et dans le cytosol, et une seconde phase dans laquelle la dénaturation des protéines est induite, provoquant leur précipitation par relargage ou alcalinisation du milieu.

4. Procédé selon la revendication 1, 2 ou 3, dans lequel l'étape d'extraction des huiles essentielles des drêches de brasserie par hydrodistillation est réalisée à l'aide d'un réacteur à micro-ondes et comprend les sous-étapes suivantes :
- l'hydrodistillation, dans laquelle le chauffage du système est induit par 2 magnétrons qui irradient uniformément la biomasse dans le réacteur, la capacité de transférer l'énergie thermique au sein du système de cette manière réduisant les phénomènes de combustion et la production d'artefacts indésirables qui altéreraient les propriétés organoleptiques de l'extrait ;
- Stockage d'huiles extraites, pures, sans aucun solvant et occupant peu d'espace, dans un environnement sombre et réfrigéré.

5. Procédé selon l'une quelconque des revendications précédentes, dans lequel l'étape d'incorporation d'arabino-xylanes, de protéines et d'huiles essentielles dans des produits alimentaires liquides, notamment des boissons, comprend les sous-étapes suivantes :
- création d'une émulsion dans la boisson afin de ne pas former de phase biphasique à la surface, en remettant en suspension les huiles dans la boisson à un volume environ cent fois supérieur au leur, après une série de dilutions successives;
- obtention d'une émulsion stabilisée par traitement ultrasonique ;
- maintenir l'émulsion sous agitation constante jusqu'à son introduction dans la boisson ;
- introduction de l'émulsion dans la boisson via un distributeur connecté en aval d'une installation de production de boissons, ce distributeur étant capable de prélever de petites quantités de liquide et de les introduire dans le flux de produit sortant de l'installation de production afin de faciliter sa remise en suspension dans le volume final total de la boisson.

6. Procédé selon la revendication 5, dans lequel l'installation de production de boissons est une installation de centrifugation et de carbonatation de bière capable de traiter en moyenne 4000 L/h, tandis que le distributeur est capable d'introduire 2 mL/L d'émulsion, parvenant ainsi à introduire constamment de petites quantités de suspension d'huile essentielle sans induire une surconcentration locale qui provoquerait inévitablement la réapparition de la phase biphasique huile essentielle/bière.

7. Système d'extraction des arabino-xylanes, de protéines et d'huiles essentielles à partir de drêches de brasserie et de leur utilisation dans des produits alimentaires liquides, le système comprenant :
- moyens d'extraction des d'arabino-xylanes signifie à partir de drêches de brasserie
- moyens d'extraction des protéines des drêches de brasserie
- moyens d'extraction des huiles essentielles des drêches de brasserie par hydrodistillation assistée par micro-ondes
- moyens d'incorporation d'arabino-xylanes, de protéines et d'huiles essentielles dans les produits alimentaires liquides, notamment les boissons.

8. Système selon la revendication 7, dans laquelle les moyens d'extraction des arabino-xylanes à partir de drêches de brasserie comprennent :
- moyens de broyage des céréales et d'extraction des sucres présents dans l'amidon des céréales pour produire le moût, le milieu sur lequel les levures effectueront la fermentation transformant le moût en bière, tels moyens produisant une solution liquide avec un grand nombre de matières en suspension ;
- moyens de filtration des matières en suspension, générant un déchet à utiliser comme source d'arabino-xylanes ; à la fin de la filtration, les grains usés présentent une concentration d'humidité d'environ 80 %, ce qui les rend à la fois difficiles à transporter et exposés à un risque de contamination ;
- moyens de presser le grain pour abaisser l'humidité à environ 50 % ;
- moyens de traitement des grains pressés par stabilisation consistant en séchage jusqu'à ce que les concentrations d'humidité soient inférieures à 10 %, et stockage des grains dans un environnement sec et thermostaté ;
- moyens de réaliser la digestion enzymatique des drêches, dans lesquels, à la fin de la digestion enzymatique, les arabino-xylanes sont remis en suspension dans l'eau et, pour faciliter leur utilisation, subissent un processus de séchage par pulvérisation, afin de les transformer en une poudre anhydre facile à utiliser ;
- moyens d'ajouter des fibres de céréales draguées purifiées et lyophilisées à un mélange comme une farine traditionnelle.

9. Système selon la revendication 7 ou 8, dans lequel les moyens d'extraction des protéines des drêches de brasserie comprennent :
- moyens de réhydratation des résidus ;
- moyens de chauffer les grains et d'introduire les enzymes responsables de l'hydrolyse des arabino-xylanes, qui sont ensuite transférées dans le milieu aqueux ;
- moyens de séparer les solides des liquides par simple filtration et d'obtenir les fibres hydrolysées par des enzymes en phase liquide, tandis que les résidus de la drêche sont à l'état solide ;
- moyens d'extraction des protéines à partir du résidu solide formé, y compris des moyens de libération des protéines par des prétraitements ultrasoniques ou enzymatiques capables de libérer le composant protéique piégé dans les parois cellulaires et dans le cytosol, et des moyens d'induire la dénaturation des protéines en provoquant leur précipitation par relargage salin ou par basification du milieu.

10. Système selon la revendication 7, 8 ou 9, dans lequel les moyens d'extraction d'huiles essentielles à partir de drêches de brasserie par hydrodistillation comprennent un réacteur à micro-ondes et :
- moyens d'hydrodistillation, dans lesquels le chauffage du système est induit par 2 magnétrons qui irradient uniformément la biomasse dans le réacteur, la capacité de transférer l'énergie thermique au sein du système de cette manière réduisant les phénomènes de combustion et la production d'artefacts indésirables qui altéreraient les propriétés organoleptiques de l'extrait ;
- moyens de conservation des huiles extraites, pures, sans aucun type de solvant et occupant peu d'espace, dans un environnement sombre et réfrigéré.

11. Système selon l'une quelconque des revendications 7 à 10 précédentes, dans lequel les moyens de transfert d'arabino-xylanes, de protéines et d'huiles essentielles dans des produits alimentaires liquides, notamment des boissons, comprennent :
- moyens de créer une émulsion dans la boisson afin de ne pas former de phase biphasique à la surface, en remettant en suspension les huiles dans la boisson à environ cent fois leur volume, après une série de dilutions successives ;
- moyens d'obtenir une émulsion stabilisée par traitement ultrasonique ;
- moyens de maintenir l'émulsion en agitation constante jusqu'à son introduction dans la boisson ;
- moyens d'introduire l'émulsion dans la boisson via un distributeur connecté en aval d'une installation de production de boissons, ce distributeur étant capable de prélever de petites quantités de liquide et de les introduire dans le flux de produit sortant de l'installation de production afin de faciliter sa remise en suspension dans le volume final total de la boisson.

12. Système selon la revendication 11, dans lequel le système de production de boissons est un système de centrifugation et de carbonatation de bière capable de traiter en moyenne 4000 L/h, tandis que le distributeur est capable d'introduire 2 mL/L d'émulsion, parvenant ainsi à introduire constamment de petites quantités de suspension d'huile essentielle sans induire une surconcentration locale qui provoquerait inévitablement la réapparition de la phase biphasique huile essentielle/bière.
